# EUROPÄISCHE PATENTANMELDUNG

(11) **EP 1 406 061 A2**
(43) Veröffentlichungstag der Anmeldung: **07.04.2004**
(21) Anmeldenummer: 03022405.9
(22) Anmeldetag: 06.10.2003
(51) Int. Cl.: G01B 11/24

(54) **Vorrichtung und Verfahren zum Erkennen der Lage von Einprägungen**

(30) Priorität: 04.10.2002 DE 10246449
(71) Anmelder: GROSSMANN, HANS, 89555 STEINHEIM (DE)
(72) Erfinder: Kleinhuber, Harald, G., 06640 St. Jeannet (FR)
(74) Vertreter: Lorenz, Werner, Dr.-Ing.

(57) **Zusammenfassung**

Eine Vorrichtung zum Erkennen der Lage von Einprägungen (7) in Oberflächen (6), insbesondere in Materialbahnen, weist eine Strahlungseinrichtung (1,2) auf, die ein Strahlenbild (8) auf die mit den Einprägungen (7) versehene Oberfläche (6) projiziert. Das Strahlenbild (8) entspricht zumindest dem Verlauf eines Teilbereichs der Einprägungen (7). Die von der Oberfläche (6) erzeugte Reflexion (10) des Strahlenbildes (8) ist von mindestens zwei auf Abstand zueinander angeordneten Detektoren (3,5' bzw. 4,5) erfassbar. Der Intensitätsunterschied der von den Detektoren (3,5' bzw. 4,5) erfassten Reflexion (10) ist elektronisch verwertbar.

## Beschreibung

Die Erfindung betrifft eine Vorrichtung und ein Verfahren zum Erkennen der Lage von Einprägungen in Oberflächen, insbesondere in Materialbahnen.

Bei der Herstellung von dreidimensionalen Gebilden (z.B. Schachteln, Displays usw.) aus Pappe, Karton, Kunststoff oder ähnlichem Material, werden die Zuschnitte (Nutzen) maschinell vorgefaltet und/oder in Endstellung gefaltet. Die vorgesehenen Knickstellen (Falze) werden vorher in Form von Rillen oder einer Linie folgenden Vertiefungen eingeprägt, meist als flache, linienförmige Einprägungen auf der Materialbahn. Der Faltmechanismus muss entsprechend der Lage dieser Falze oder Rillen auf der Materialbahn gesteuert werden.

Wesentlich bei der Herstellung von Gebilden aus Materialbahnen und dergleichen ist außerdem die Bahnsteuerung, d.h. das erkannt werden muss, ob die Materialbahn auf der vorgesehenen Linie/Bahn verläuft oder quer zu dieser versetzt ist. Des weiteren ist eine Rapportsteuerung wichtig, durch die beispielsweise festgelegt wird, in welchen Abständen die Materialbahn abzulängen ist bzw. an welchen Positionen Bohrungen und dergleichen eingebracht werden müssen.

Andere Anwendungsgebiete können das Erkennen von ähnlichen linienförmigen Vertiefungen auf der Oberfläche von Teilen betreffen, die entsprechend der Lage dieser Linien gerichtet, z.B. einem Magazin oder einem Montagesystem zugeführt werden müssen.

Aus dem allgemeinen Stand der Technik ist es bekannt, die Lage von Bahnen und Prägestellen auf diesen Bahnen mit aufgedruckten oder aufgeklebten Marken relativ gut in Durchlaufrichtung, schlechter quer, zur Durchlaufrichtung zu erkennen. Von Nachteil dabei ist es, dass die Marken relativ zum Falz verschoben sein können. Sichere Messungen sind auf einfache Weise nur in Durchlaufrichtung realisierbar. Häufig gibt es Probleme, die aufgebrachten Marken zu erkennen, weil das erzeugte Signal von aufgedruckten Texten und/oder Bildern gestört wird. Das präzise Aufbringen der Marken ist ein zusätzlicher Kostenfaktor. Es wäre daher besser, die Lage der Falze direkt, d.h. ohne Marken, erkennen zu können.

Aus dem weiteren Stand der Technik sind ferner Messverfahren mit Ultraschall bekannt, die sich jedoch in der Praxis als zu teuer erwiesen haben.

Aus dem allgemeinen Stand der Technik ist es ferner bekannt, Messungen mit einer Diodenmatrix vorzunehmen. Derartige Messungen sind technisch realisierbar, verursachen jedoch ebenfalls hohe Kosten.

Ferner ist es aus dem allgemeinen Stand der Technik bekannt, Bilderkennungssysteme mit Stroposkospen einzusetzen, wodurch jedoch ebenfalls sehr hohe Kosten entstehen.

Der vorliegenden Erfindung liegt daher die Aufgabe zugrunde, ein Verfahren und eine Vorrichtung zum Erkennen der Lage von Einprägungen in Oberflächen, insbesondere in Materialbahnen zu schaffen, wodurch eine preisgünstige, einfache und direkte Messung der Einprägungen ohne Störungen durch aufgedruckte Texte oder Bilder möglich ist.

Erfindungsgemäß wird diese Aufgabe durch den kennzeichnenden Teil von Anspruch 1 gelöst. Erfindungsgemäß wird diese Aufgabe auch durch den kennzeichnenden Teil von Anspruch 9 gelöst.

Das Strahlenbild weist vorzugsweise eine längliche Form auf, um Einprägungen wie z.B. wellenförmige, geradlinige, rillenförmige oder andersartig ausgebildete Einprägungen erfassen zu können. Das Strahlenbild entspricht dabei zumindest dem Verlauf eines Teilbereiches der Einprägung, beispielsweise einer geradlinigen Falzrille. Das Strahlenbild wird durch die Strahlungseinrichtung auf die mit den Einprägungen versehene Oberfläche projiziert und von dort in alle Richtungen diffus gestreut. Die quer zu dem Strahlenbild (beispielsweise einer geraden Strahlenlinie) also im 90° Winkel gestreute Strahlung wird von zwei auf Abstand zueinander angeordneten Detektoren erfasst. Die Detektoren können dabei jeweils eine Fotodiode sowie eine die zu messende Reflexion bündelnde Optik aufweisen. Vorzugsweise können die Fotodioden als großflächige Fotodioden ausgebildet sein.

Solang die Oberfläche plan ist, bekommen die beiden Fotodioden Lichtstärken, die immer im gleichen Verhältnis zueinander stehen. Sobald sich eine gekrümmte Oberfläche durch das Strahlenbild bewegt, ändert sich dieses Verhältnis.

Ein Differenzverstärker misst die Ausgangssignale der Fotodetektoren bzw. der Fotodioden, verstärkt sie und wandelt sie in gut verarbeitbare und erkennbare elektrische Signale um.

Durch die Verwendung eines Strahlenbildes das zumindest dem Verlauf eines Teilbereiches der Einprägung entspricht, bekommen die Fotodioden nur dann ein starkes Signal, wenn das Strahlenbild in die gleiche Richtung verläuft, wie die Einprägung und wenn die Einprägung eine gewisse Länge hat.

Wenn es sich bei der Einprägung um eine geradlinige Falzrille handelt und somit das Strahlenbild ebenfalls einen geradlinigen Verlauf hat, entsteht folglich nur dann ein starkes Signal, wenn der Verlauf bzw. die Richtung der Strahlenlinie dem geradlinigen Verlauf der Falzrille entspricht und wenn die Falzrille eine gewisse Länge hat.

Punktförmige Vertiefungen in der Oberfläche oder Falzrillen quer zur Strahlenlinie erzeugen nur ein schwaches Signal.

Statt der Erzeugung eines Strahlenbildes aus der Strahlung einer einzigen Strahlungseinrichtung kann auch mit zwei, drei oder mehreren Strahlungseinrichtungen, beispielsweise Diodenlasern eine Reihe von Lichtpunkten erzeugt und damit in ähnlich Weise gemessen werden. Dies wäre dann teurer, würde aber bei Sonderfällen der Messaufgaben Vorteile bieten.

In einfacher Weise kann beispielsweise das Licht eines Diodenlasers durch ein optisches Medium so verändert werden, dass man die Form einer Lichtlinie statt des üblichen Brennfleckes erhält. Diese Lichtlinie wird dabei so eingestellt, dass sie im gleichen Winkel zur Laufrichtung steht wie die zu erkennende und zu messende Einprägung bzw. die Falzrille.

Durch die erfindungsgemäße Vorrichtung und das erfindungsgemäße Verfahren sind sehr preisgünstige, einfache und direkte Messungen der Lage von Einprägungen, beispielsweise von geprägten Falzen, völlig unabhängig von aufgedrucktem Text und Bildern möglich. Die Messung ist unabhängig von weiteren Falzen möglich, die beim Falten des zu erstellenden Gebildes beispielsweise des Behälters oder Displays notwendig sind, aber für den nächsten maschinellen Schritt nicht benötigt werden. Das heißt es kann immer ein bestimmter Falz präzise ermittelt werden. Außerdem kann dessen Lage und somit die Lage des Materials in Durchlaufrichtung und gleichzeitig quer dazu bestimmt werden. Die Erkennung der Einprägung ist in vorteilhafter Weise gegen Abstandsänderungen zwischen Sensor und Materialbahn unempfindlich, d.h. es sind auch Messungen möglich, wenn die Oberfläche, beispielsweise eine Materialbahn, flattert.

In vorteilhafter Weise sind keine aufgedruckten oder aufgeklebten Marken mehr notwendig, wodurch dieser Zusatzaufwand und die dadurch entstehende Unsicherheit entfällt.

Von Vorteil ist es außerdem, dass direkt die Lage der Einprägung bzw. der Falzrille überprüft wird, d.h. eine Verschiebung einer Marke spielt keine Rolle mehr.

Von Vorteil ist es außerdem, dass sofort die Abweichung der Lage der Falzrille durch Querverschiebung der Bahn erkannt werden kann.

Die Vorrichtung und das Verfahren sind einfach durchzuführen, da kostengünstige und handelsübliche Komponenten verwendbar sind.

Vorteilhafte Ausgestaltungen und Weiterbildungen der Erfindung ergeben sich aus den weiteren Unteransprüchen.

Nachfolgend wird anhand der Zeichnung ein Ausführungsbeispiel der Erfindung prinzipmäßig dargestellt.

Es zeigt:
- Fig. 1a: eine Prinzipskizze der erfindungsgemäßen Vorrichtung;
- Fig. 1b: eine Draufsicht auf die Materialbahn gemäß Pfeil Richtung A der Fig. 1a;
- Fig. 2a bis 2c: eine Darstellung der Reflexion des Strahlenbildes auf Oberflächen mit diffusem Reflexionsverhalten; und
- Fig. 3a bis 3c: eine Prinzipdarstellung der Messung von seitlichen Verschiebungen von Materialbahnen.

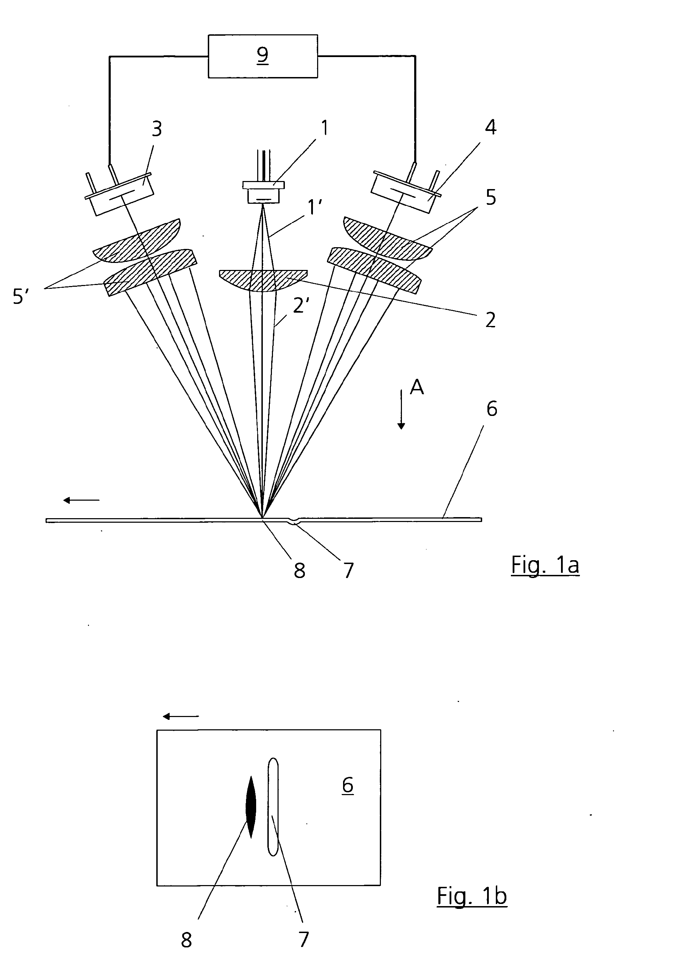

Fig. 1 zeigt eine Strahlungseinrichtung die einen Laser 1 und ein optisches Medium 2 aufweist. Der Laser ist dabei als Laserdiode 1 ausgebildet und strahlt Licht in Form eines Lichtkegels 1' in Richtung einer als Materialbahn 6 ausgebildeten Oberfläche. Der Lichtkegel 1' wird durch das optische Medium, welches als Zylinderlinse 2 ausgebildet ist zu einem Lichtfächer 2' umgeformt und so fokussiert, dass beim Auftreffen auf die Oberfläche der Materialbahn 6 an deren Oberfläche ein linsenförmiges bzw. schmales Strahlenbild 8 entsteht, das im Ausführungsbeispiel als schmale Lichtlinie ausgebildet ist. Die Lichtlinie 8 ist in Fig. 1a und 1b in Durchlaufrichtung der Materialbahn 6 (Pfeilrichtung) kurz vor einer Einprägung 7 positioniert, die als geradlinige Falzrille ausgebildet ist. Die Falzrille 7 bewegt sich somit in Laufrichtung der Materialbahn 6 auf die Lichtlinie 8 zu.

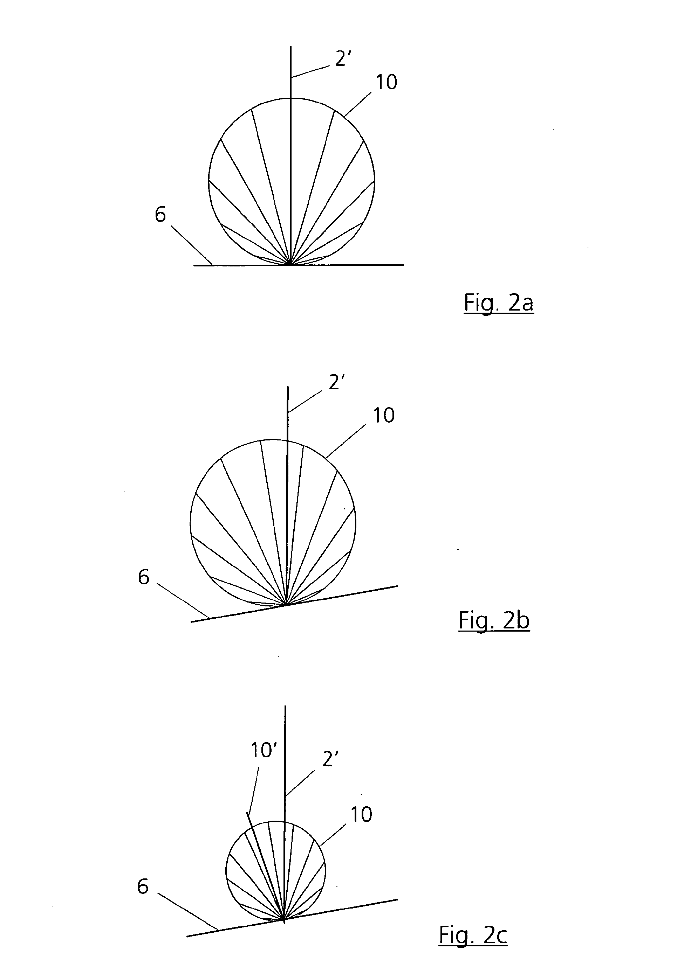

Die Lichtlinie 8 ist im dargestellten Ausführungsbeispiel als elliptischer Lichtfächer ausgebildet. Das von der Lichtlinie 8 gestreute Licht wird nach allen Seiten gestreut (Reflexion 10 gemäß den Fig. 2a - 2c). In einer nachfolgend dargestellten Ausführungsform wird ebenfalls die Möglichkeit der Erfassung einer Reflexion (10',10) dargestellt, ohne dass eine Streuung, d.h. Streulicht notwendig ist.

Ein Teil des quer zur Lichtlinie 8, also im Winkel von 90°, zur Längsachse der Lichtlinie 8 gestreuten Lichts, wird von zwei Detektoren erfasst. Die Detektoren weisen dabei jeweils eine Fotodiode 3, 4 sowie eine die zu messende Reflexion 10 bündelnde Optik 5, 5' auf. Die bündelnde Optik 5, 5' kann dabei beispielsweise aus einer Anordnung von mehreren Linsen bestehen. Im Ausführungsbeispiel sind dabei zwei Linsen dargestellt, wobei sich in der Praxis ein Linsenbündel das aus mehr als zwei Linsen besteht als vorteilhaft herausgestellt hat. Die Optik 5, 5' sammelt das im Winkel von 90° zur Längsachse der Lichtlinie gestreute Licht und bündelt dieses auf die vorzugsweise großflächigen Fotodioden 3,4.

Solange die Materialbahn 6, auf die die Lichtlinie 8 auftrifft, plan ist, bekommen die beiden Fotodetektoren bzw. die Fotodioden 3, 4 Lichtstärken, die immer im gleichen Verhältnis zueinander stehen. Sobald sich eine gekrümmte Oberfläche (d.h. die Falzrille 7) durch die Lichtlinie 8 bewegt, ändert sich dieses Verhältnis. Dabei wird der Intensitätsunterschied der von den Fotodioden 3, 4 erfassten Reflexion 10 elektronisch verwertet. Im Ausführungsbeispiel wird hierzu ein Differenzverstärker 9 verwendet, der ein elektronisches Signal erzeugt, wenn aufgrund der Falzrille 7 eine gekrümmte Oberfläche durch die Lichtlinie 8 bewegt wird. Da sich durch die gekrümmte Oberfläche die Reflexion 10 der Lichtlinie 8 ändert (wie in Fig. 2a und 2b dargestellt), ändert sich auch die von den Fotodioden 3, 4 erfasste Reflexion. Das erfindungsgemäße Verfahren bzw. die Vorrichtung funktioniert unabhängig davon, of die Falzrille 7 nach unten oder nach oben gewölbt ist, da in beiden Fällen eine die Reflexion ändernde Krümmung entsteht.

Durch die Verwendung der Lichtlinie 8, die zumindest dem Verlauf eines Teilbereiches der Falzrille 7 entspricht, bekommen die Fotodioden 3, 4 nur dann ein starkes Lichtsignal, wenn die Lichtlinie 8 die gleiche Richtung wie die linienförmige Falzrille 7 hat und wenn die Falzrille 7 eine gewisse Länge hat.

Punktförmige Vertiefungen in der Oberfläche der Materialbahn 6 oder Falzrillen quer zur Lichtlinie 8 erzeugen nur ein schwaches Signal.

In den Figuren 2a und 2b wird erläutert, wie das Streulicht bei Oberflächen mit diffusem Reflexionsverhalten, z.B. Kartonoberflächen, genutzt wird.

Fig. 2a zeigt, wie gebündeltes Licht 2' auf eine Oberfläche 6 mit diffusem Reflexionsverhalten auftritt und wie dabei die Streulichtintensität (Reflexion 10) vom Streuwinkel abhängt. Die Streulichtintensität richtet sich nach dem sogenannten Kosinusgesetz.

Fig. 2b zeigt dabei, dass die Intensitätsverteilung konstant relativ zur Oberfläche 6 bleibt.

Wenn die Oberfläche 6 mit diffuser Reflexion 10 zur Einfallsrichtung des gebündelten Lichtes 2' (wie in Fig. 2b dargestellt) gekippt wird, wird auf der linken Seite des Lichtbündels 2' eine höhere Intensität gemessen, als auf der rechten Seite. Ein Kippen der Oberfläche 6 zur Einfallsrichtung des Lichtbündels 2' erfolgt bei einer ansonsten planen Materialbahn dadurch, dass der Lichtstrahl die gekrümmte Fläche des Falzes hinunter- bzw. wieder heraufläuft. Durch die Krümmung der Oberfläche 6 ändert sich folglich, wie in Fig. 2b prinzipmäßig dargestellt, die Reflexion 10, sodass sich das Verhältnis der Lichtstärke, die die Fotodioden 3, 4 messen ändert. Hieraus lässt sich ein Signal erzeugen und elektronisch verwerten.

Fig. 2c bezieht sich auf Oberflächen mit diffusem Reflexionsverhalten, z.B. Karton mit Plastikfolie.

Dabei wird ein Teil des Lichtes von einem Spiegel, also speculär (Reflexion 10'), reflektiert und ein anderer Teil des Lichtes wird diffus (Reflexion 10) reflektiert.

Dies zeigt, dass die erfindungsgemäße Lösung auch für Oberflächen 6 mit nur teilweiser diffuser Reflexion angewendet werden kann. Auch vollständig ohne eine diffuse Reflexion lasse sich Falzrillen 7 bzw. deren Lage erkennen. Wie aus Fig. 2c ersichtlich ist, wird auch der speculär reflektierte Teil 10' des Lichtes abgelenkt, wenn die Oberfläche 6 zur Einfallsrichtung des Lichtbündels 2' gekippt wird.

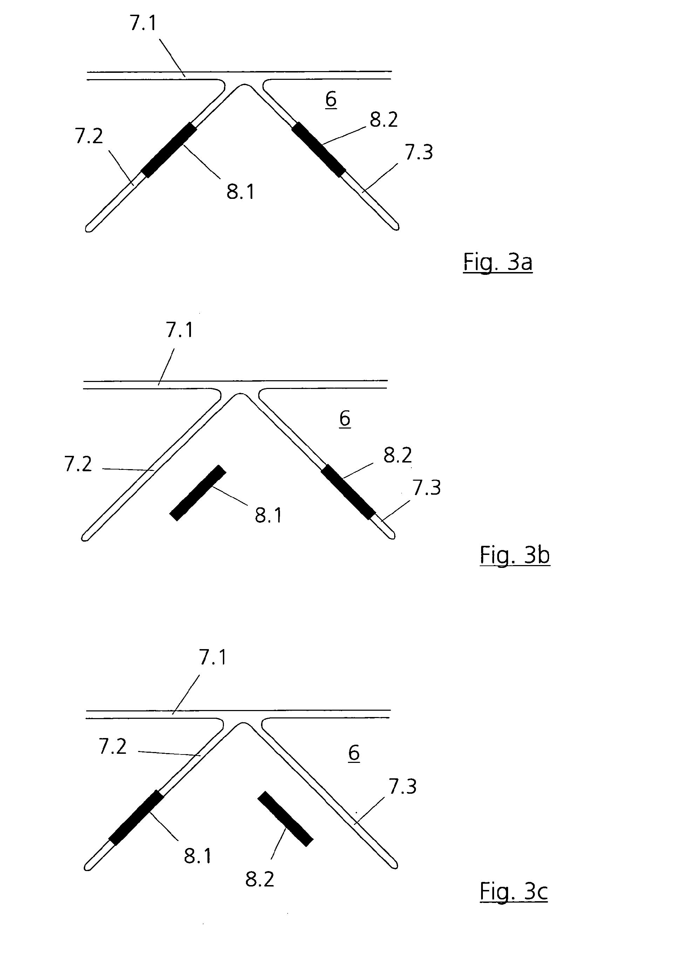

Fig. 3a bis Fig. 3c zeigen, wie die Messung der seitlichen Verschiebung, d.h. quer zur Bewegungsrichtung der Materialbahn 6 funktioniert.

Fig. 3a zeigt, dass die Materialbahn 6 mit Falzen 7.1, 7.2, 7.3 seitlich nicht verschoben ist. Die beiden schrägen Falze 7.2, 7.3 erreichen gleichzeitig die Lichtlinien 8.1 und 8.2. Es ist keine Phasenverschiebung vorhanden. Selbstverständlich kann der Sollwert auch darin bestehen, dass beispielsweise die Falzrille 7.2 die Lichtlinie 8.1 in einem vorgegebenen zeitlichen Abstand passiert nachdem die Falzrille 7.3 die Lichtlinie 8.2 durchlaufen hat.

Bei Fig. 3b sind die Materialbahn 6 und die Falze 7.1 bis 7.3 seitlich nach links verschoben. Die rechte Falzrille 7.3 erreicht zuerst die Lichtlinie 8.2. Danach erreicht die linke Falzrille 7.2 mit seitlicher Verzögerung die Lichtlinie 8.1. Die Phasenverschiebung zwischen dem Zeitpunkt an dem Falze 7.2 und 7.3 die Lichtlinien 8.1 bzw. 8.2 erreichen ist ein Maß für die seitliche Verschiebung. Dadurch lässt sich elektronisch in einfacher Weise ermitteln inwieweit die Materialbahn 6 verschoben ist.

Die Fig. 3c zeigt einen Materialbahn 6 bei der die Falzrillen 7.1 bis 7.3 seitlich nach rechts verschoben sind. Die linke Falzrille 7.2 erreicht zuerst die Lichtlinie 8.1, dann erreicht die rechte Falzrille 7.3 mit zeitlicher Verzögerung die Lichtlinie 8.2. Die Phasenverschiebung zwischen dem Erreichen der Lichtlinie 8.1 und 8.2 ist wiederum ein Maß für die seitliche Verschiebung.

Durch den Einsatz von zwei Lichtlinien 8.1 und 8.2, wobei die von der Oberfläche 6 erzeugte Reflexion 10 jedes Lichtbildes 8.1 und 8.2 jeweils von mindestens zwei Detektoren erfasst wird, lässt sich in einfacher Weise eine Bahnsteuerung erreichen, d.h. ermitteln inwiefern die Materialbahn 6 in Relation zur vorgesehenen Mittelachse in Laufrichtung verschoben ist.

Zur Rapportsteuerung, d.h. zur Bestimmung der Länge der durchgelaufenen Materialbahn 6, beispielsweise um diese entsprechend abzulängen oder um an definierten Stellen vorzugsweise Bohrungen in die Materialbahn einzubringen, sind ebenfalls zwei oder mehrere Lichtlinien vorgesehen. Wie in einfacher Weise aus Fig. 3a ersichtlich ist, lässt sich die genaue Position der Materialbahn 6 dadurch bestimmen, dass die Falzrillen 7.2 und 7.3 die Lichtlinien 8.1 und 8.2 passieren. Selbstverständlich ist eine Rapportsteuerung auch durch das Erfassen lediglich einer Falzrille 7 mittels einer Lichtlinie 8 möglich. Da die Lichtlinie 8 jeweils auf die entsprechende Falzlinie 7 hinsichtlich ihrer Richtung und ihres Verlaufes abgestimmt ist, kann die genaue Ermittlung der Position nicht gestört werden.

Die Lichtlinie 8 kann jede beliebige Form aufweisen, so kann die Lichtlinie 8 beispielsweise als Linie, als Welle oder als Kette von mindestens zwei Lichtpunkten ausgebildet sein.

Das optische Medium 2 kann beispielsweise als Linse, vorzugsweise als zylindrische Linse oder als Blende ausgebildet sein in die eine zumindest dem Verlauf eines Teilbereiches der Falzlinie 7 entsprechende Aussparung eingebracht ist.

Die Detektoren bzw. die Fotodioden 3, 4 und die jeweils bündelnde Optik 5, 5' sind vorzugsweise auf beiden Seiten der Laserdiode 1 angeordnet. Eine Messung der Intensität bzw. eines Intensitätsunterschiedes als Maßstab für die Lage bzw. die Lageverschiebung der Falzrillen 7 ist somit in einfacher Weise möglich.

In einer alternativen Ausführungsform kann die Lichtlinie 8 auch durch Lichtpunkte mit Hilfe mehrere, aber mindestens zweier Laserdioden 1 gebildet werden.

Wie aus Fig. 1 ersichtlich ist, ist die Ausgangseite der Fotodioden 3, 4 mit einem Differenzverstärker 9 verbunden, sodass ein verstärktes elektrisches Signal erzeugbar ist, wenn sich eine parallel zur projizierten Lichtlinie 8 verlaufende Falzrille 7 durch die Lichtlinie 8 bewegt.

In einer alternativen Ausgestaltung kann vorgesehen sein, dass das im Strahlengang befindliche optische Medium 2 durch eine frei geformte Linse ersetzt wird, die es erlaubt, eine gekrümmte Lichtlinie 2' zu erzeugen, um die Lage gekrümmter Falzrillen in gleicher Weise erkennen zu können.

Das auf die Oberfläche der Materialbahn 6 projizierte Strahlenbild bzw. die im Ausführungsbeispiel dargestellte Lichtlinie 8 bewegt sich relativ zu der Oberfläche der Materialbahn 6. Dies kann einerseits dadurch erreicht werden, dass, wie im Ausführungsbeispiel vorgesehen, die Materialbahn 6 bewegt wird (siehe Pfeilrichtung in Fig. 1a und Fig. 1b).

Alternativ dazu kann dies auch dadurch erreicht werden, dass das von der Strahlungseinrichtung, d.h. von der Laserdiode 1 erzeugte Lichtbild 1' mittels eines bewegten, vorzugsweise rotierenden Spiegels in eine scannende Bewegung gebracht und dieser Lichtstrahl 2' auf die Oberfläche der Materialbahn 6 projiziert wird. Die Erzeugung einer scannenden Bewegung eines Lichtstrahles ist aus dem allgemeinen Stand der Technik hinlänglich bekannt. Beispielsweise können hierzu plane Spiegel verwendet werden, die um einen rotierenden Körper angeordnet sind.

## Patentansprüche

1. Vorrichtung zum Erkennen der Lage von Einprägungen in Oberflächen, insbesondere in Materialbahnen, **dadurch gekennzeichnet , dass** wenigstens eine Strahlungseinrichtung (1,2) vorgesehen ist, die ein Strahlenbild (8) auf die mit den Einprägungen (7) versehene Oberfläche (6) projiziert, wobei das Strahlenbild (8) zumindest dem Verlauf eines Teilbereiches der Einprägung (7) entspricht, und wobei die von der Oberfläche (6) erzeugte Reflexion (10) des Strahlenbildes (8) von mindestens zwei auf Abstand zueinander angeordneten Detektoren (3,5' bzw. 4,5) erfassbar ist, und wobei der Intensitätsunterschied der von den Detektoren (3,5' bzw. 4,5) erfassten Reflexion (10) elektronisch verwertbar ist.

2. Vorrichtung nach Anspruch 1,
**dadurch gekennzeichnet, dass**
die Strahlungseinrichtung einen Laser (1) sowie ein optisches Medium (2) zur Erzeugung des Strahlenbildes (8) aufweist.

3. Vorrichtung nach Anspruch 1,
**dadurch gekennzeichnet, dass**
das Strahlenbild (8) durch mehrere Laser (1) gebildet ist.

4. Vorrichtung nach Anspruch 1 bis 3,
**dadurch gekennzeichnet, dass**
die Detektoren jeweils eine Fotodiode (3,4) sowie eine die zu messende Reflexion (10) bündelnde Optik (5',5) aufweisen.

5. Vorrichtung nach einem der Ansprüche 1 bis 4,
**dadurch gekennzeichnet, dass**
die Ausgangsseiten der Detektoren (3,5' bzw. 4,5) mit einem Differenzverstärker (9) verbunden sind, sodass ein verstärktes elektrisches Signal erzeugbar ist, wenn sich eine parallel zum projizierten Strahlungsbild (8) verlaufende Einprägung (7) durch das Strahlungsbild (8) bewegt.

6. Vorrichtung nach einem der Ansprüche 2 bis 5,
**dadurch gekennzeichnet, dass**
das optische Medium (2) als Blende ausgebildet ist, in die eine zumindest dem Verlauf eines Teilbereiches der Einprägung (7) entsprechende Aussparung eingebracht ist.

7. Vorrichtung nach einem der Ansprüche 1 bis 6,
**dadurch gekennzeichnet , dass**
sich das auf die Oberfläche (6) projizierte Strahlenbild (8) relativ zu der Oberfläche (6) bewegt.

8. Vorrichtung nach Anspruch 7,
**dadurch gekennzeichnet, dass**
das von der Strahlungseinrichtung (1,2) erzeugte Strahlenbild (8) mittels eines bewegten, vorzugsweise rotierenden Spiegels in eine scannende Bewegung bringbar und auf die Oberfläche (6) projizierbar ist.

9. Verfahren zum Erkennen der Lage von Einprägungen in Oberflächen, insbesondere in Materialbahnen,
**dadurch gekennzeichnet, dass**
ein von wenigstens einer Strahlungseinrichtung (1,2) erzeugtes Strahlenbild (8) auf die mit den Einprägungen (7) versehene Oberfläche (6) projiziert wird, wobei das Strahlenbild (8) zumindest dem Verlauf eines Teilbereiches der Einprägung (7) entspricht, und wobei die von der Oberfläche(6) erzeugten Reflexion (10) des Strahlenbildes (8) von mindestens zwei auf Abstand zueinander angeordneten Detektoren (3,5' bzw. 4,5) erfasst wird, und wobei der Intensitätsunterschied der von den Detektoren (3,5' bzw. 4,5) erfassten Reflexion (10) elektronisch verwertet wird.

10. Verfahren nach Anspruch 9,
**dadurch gekennzeichnet, dass**
zur Bahn- und/oder Rapportsteuerung wenigstens zwei Strahlenbilder (8) erzeugt werden, wobei die von der Oberfläche (6) erzeugten Reflexionen (10) der Strahlenbilder (8) jeweils von mindestens zwei Detektoren (3,5' bzw. 4,5) erfasst werden.
